(19) Europäisches Patentamt
European Patent Office
Office européen des brevets

(11) **EP 1 896 280 B1**

(12) **FASCICULE DE BREVET EUROPEEN**

(45) Date de publication et mention
de la délivrance du brevet:
**08.09.2010 Bulletin 2010/36**

(21) Numéro de dépôt: **06778972.7**

(22) Date de dépôt: **23.06.2006**

(51) Int Cl.:
***B60K 6/20*** (2007.10)

(86) Numéro de dépôt international:
**PCT/FR2006/050628**

(87) Numéro de publication internationale:
**WO 2007/000554 (04.01.2007 Gazette 2007/01)**

(54) **PROCEDE POUR PILOTER LE COUPLAGE OU LE DECOUPLAGE DES DEUX MOTEURS D' UN GROUPE MOTOPROPULSEUR HYBRIDE PARALLELE**

**VERFAHREN ZUR STEUERUNG DER KOPPLUNG ODER ENTKOPPLUNG ZWEIER MOTOREN EINES PARALLEL-HYBRIDMOTOR-STROMAGGREGATS**

**METHOD FOR CONTROLLING THE COUPLING OR THE DECOUPLING OF TWO MOTORS OF A PARALLEL HYBRID MOTIVE POWER GROUP**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.06.2005 FR 0506515**

(43) Date de publication de la demande:
**12.03.2008 Bulletin 2008/11**

(73) Titulaire: **PEUGEOT CITROËN AUTOMOBILES S.A.**
**78140 Vélizy Villacoublay (FR)**

(72) Inventeurs:
• **LE NEINDRE, Yvan**
**F-75017 Paris (FR)**
• **ROCQ, Gaétan**
**F-78125 La Boissière Ecole (FR)**

(56) Documents cités:
**EP-A- 0 940 287**       **US-A1- 2003 004 031**
**US-A1- 2005 029 023**   **US-B1- 6 505 109**

## Description

La présente invention est relative au pilotage du couplage et du découplage du premier moteur et du deuxième moteur d'un groupe motopropulseur hybride parallèle, et par exemple d'un groupe motopropulseur hybride parallèle comprenant un premier moteur électrique et un deuxième moteur thermique pouvant être couplés par l'intermédiaire d'un embrayage commandé, et destinés à entraîner un véhicule automobile.

On connaît des véhicules automobiles équipés de groupe motopropulseur hybride parallèle. Les groupes motopropulseurs hybrides parallèles sont des groupes motopropulseurs comprenant un premier moteur en général électrique et un deuxième moteur en général thermique pouvant être couplés ou découplés par l'intermédiaire d'un embrayage commandé, de façon à optimiser en permanence l'utilisation des différentes énergies à disposition.

Selon les conditions de fonctionnement du véhicule, ou bien on utilise le moteur électrique seul, ou bien on utilise le moteur électrique accouplé avec le moteur thermique, dans ce cas le moteur électrique pouvant d'ailleurs fonctionner en mode récepteur d'énergie. L'accouplement/ désaccouplement du moteur thermique et du moteur électrique se fait en utilisant l'embrayage commandé. Cet ensemble est piloté par des automates ou plus généralement des systèmes informatiques dédiés à chacun des composants : moteur thermique, embrayage, moteur électrique, supervisés par un ordinateur d'ensemble qui en fonction des conditions de fonctionnement du véhicule détermine le mode optimal de fonctionnement du groupe motopropulseur.

Lorsque l'ordinateur de supervision donne pour instruction de passer d'un état où seul le moteur électrique est utilisé à un état où le moteur électrique est accouplé au moteur thermique ou inversement, les automates dédiés aux équipements assurent le couplage ou le découplage du moteur thermique et du moteur électrique dans des conditions qui sont les plus satisfaisantes pour le fonctionnement du véhicule.

En particulier, le couplage et le découplage sont faits dans des conditions telles que, au moment de la fermeture ou juste avant l'ouverture de l'embrayage, le moteur électrique et le moteur thermique tournent à la même vitesse, et de telle sorte également qu'il y ait continuité du couple d'entraînement de l'arbre primaire par lequel le groupe moto propulseur entraîne la boîte de vitesse.

Le pilotage de ces phases transitoires de démarrage ou d'accouplement du moteur thermique et du moteur électrique est particulièrement importante dans un groupe motopropulseur hybride puisque ces changements de mode de fonctionnement peuvent survenir plus de 200 fois par heure de roulage, et ce quelque soit la vitesse du véhicule ou le rapport de boîte engagé.

Ces phases transitoires d'accouplement ou de désaccouplement doivent être le plus transparentes possible pour le conducteur du véhicule de telle sorte que le temps de réponse soit minimal lors d'une accélération, que le niveau d'accélération soit cohérent avec la volonté du conducteur, que le confort longitudinal soit maximal, et que le confort acoustique soit également maximal, en particulier en évitant les emballements du moteur ou les bruits de démarrage. Or, on a constaté que la stratégie utilisée pour réaliser l'accouplement ou le désaccouplement du moteur thermique et du moteur électrique, consistant à maintenir constant le couple d'entraînement de l'arbre primaire, engendre d'importantes perturbations dans le confort lors des phases de démarrage, en particulier des chocs importants peuvent être ressentis notamment sur les premiers rapports de la boîte de vitesse.

Le document US 2003/0004031 décrit un procédé pour piloter le couplage/découplage d'un groupe motopropulseur selon le préambule de la revendication 1.

Le but de la présente invention est de remédier à cet inconvénient en proposant des conditions de pilotage du couplage ou du découplage d'un moteur thermique et d'un moteur électrique d'un groupe motopropulseur hybride parallèle qui soit tel qu'il n'engendre pas de chocs ou plus généralement de désagréments au moment de ces changements de mode de fonctionnement.

A cet effet, l'invention a pour objet un procédé pour piloter le couplage ou le découplage du premier moteur et du deuxième moteur d'un groupe motopropulseur hybride parallèle du type comprenant un premier moteur entraînant un arbre primaire, un deuxième moteur et un moyen de couplage/découplage du deuxième moteur et du premier moteur manoeuvrable entre une position d'ouverture et une position de fermeture, selon lequel on pilote le groupe motopropulseur de telle sorte que la vitesse de rotation de l'arbre primaire au moment du couplage et du découplage reste inchangée, caractérisé en ce que, pour piloter le groupe motopropulseur, on utilise une loi de commande qui engendre une discontinuité entre le couple $Cap,d$ délivré à l'arbre primaire lorsque le premier et le deuxième moteurs sont découplés, et le couple $Cap,c$ délivré à l'arbre primaire lorsque le premier et le deuxième moteurs sont couplés, choisie pour compenser l'écart entre l'inertie $Jap,d$ entraînée par l'arbre primaire lorsque le premier et le deuxième moteurs sont découplés et l'inertie $Jap,c$ entraînée par l'arbre primaire lorsque le premier et le deuxième moteurs sont couplés afin d'assurer une continuité de l'accélération de l'arbre primaire entraîné par le moteur au moment du couplage ou du découplage.

Si l'arbre primaire du groupe motopropulseur est soumis à un couple résistant $Cap,res$, la discontinuité de couple $\Delta C = Cap,c - Cap,d$ engendrée est telle que :

$$\frac{Cap,c - Cap,res}{Jap,c} = \frac{Cap,d - Cap,res}{Jap,d}$$

$$\text{Soit : } \Delta C = \frac{Jap,c - Jap,d}{Jap,d}(Cap,d - Cap,res)$$

On peut définir une consigne Cap,c,v de couple pour l'arbre primaire lorsque les moteurs sont couplés, visée après le couplage ou le découplage, et une consigne Cap, d, v de couple pour l'arbre primaire lorsque les moteurs sont découplés, visée après le couplage ou le découplage, tels que :

$$\frac{Cap,c,v - Cap,res}{Jap,c} = \frac{Cap,d,v - Cap,res}{Jap,d}$$

et on pilote le groupe motopropulseur de telle sorte que, après la manoeuvre du moyen de couplage/découplage, le couple délivré à l'arbre primaire est égal à la consigne de couple visée Cap, c, v ou Cap, d, v pour l'arbre primaire correspondant respectivement à l'état couplé ou découplé du dispositif de couplage/découplage en fin de manoeuvre.

Lorsqu'on pilote le groupe motopropulseur pour coupler le premier moteur et le deuxième moteur, on peut engendrer une discontinuité brutale de la consigne Cap,v(t) de couple pour l'arbre primaire, visée à chaque instant, égale à l'écart entre la consigne Cap,d,v de couple de l'arbre primaire lorsque les moteurs sont découplés et la consigne Cap, c, v de couple de l'arbre primaire lorsque les moteurs sont couplés.

La discontinuité brutale de la consigne Cap,v(t) de couple pour l'arbre primaire, visée à chaque instant, est engendrée de préférence à l'instant où le dispositif de couplage/découplage arrive en position de fermeture.

On peut, par exemple, commander le dispositif de couplage/découplage de façon à le faire passer de la position d'ouverture à la position de fermeture, à partir du début de la période de fermeture du dispositif de couplage/découplage, en pilotant en couple le premier moteur de telle sorte que, à chaque instant, la somme de la consigne de couple Cmot1(t) fourni par le premier moteur et de la consigne de couple Cemb(t) délivré par le dispositif de couplage/découplage soit égale à la consigne Cap,v(t), visée à chaque instant pour le couple délivré par l'arbre primaire, soit : Cap,v(t)=Cmot1(t) + Cemb(t), pendant la période de fermeture du dispositif de couplage/découplage, en pilotant le deuxième moteur en régime pour qu'au moment de la fermeture son régime soit sensiblement égal à la vitesse de rotation de l'arbre primaire, et à partir de l'instant de fermeture du dispositif de couplage/découplage en pilotant le deuxième moteur en couple avec une consigne Cmot2,v(t) égale à la somme de la consigne de couple Cemb(t) délivré par l'embrayage et de l'écart entre les consigne de couple pour l'arbre primaire visées après et avant couplage, soit :

$$\text{Cmot2,v(t) = Cemb(t) + Cap,c,v - Cap,d,v}$$

Ceci est valable jusqu'à l'instant du collage de l'embrayage qui est également l'instant de synchronisation, car, au-delà, on envoie à l'embrayage une consigne de fermeture totale afin d'éviter tout retour intempestif à l'état glissant.

On peut définir un temps Tempo de couplage et une consigne de couple optimal pour le deuxième moteur Cmot2,op, et on pilote la fermeture du dispositif de couplage/découplage de telle sorte que la consigne de couple Cemb(t) délivré par le dispositif de couplage/découplage varie linéairement avec le temps pour qu'au bout d'un temps égal à Tempo après le début de l'actionnement du moyen de couplage/découplage, la consigne de couple délivré par le deuxième moteur soit égale à la consigne Cmot2,op de couple optimal pour le deuxième moteur.

Lorsqu'on pilote le découplage du deuxième moteur, avant de déclencher l'ouverture du moyen de couplage/découplage, on peut piloter le deuxième moteur pour que la consigne de couple Cmot2,d délivré par le deuxième moteur juste avant l'instant de début d'ouverture soit égale à l'écart entre la consigne Cap, c, v de couple visée pour l'arbre primaire si il n'était pas découplé et la consigne Cap,d,v de couple délivré par l'arbre primaire après découplage, et piloter le premier moteur en couple de telle sorte que la consigne de couple Cmot1,v(t1) délivré par le premier moteur au moment du début de l'ouverture du moyen de couplage/découplage soit égale à la consigne Cap,d,v de couple de l'arbre primaire visé après découplage, et que pendant tout le découplage la somme des consignes de couple délivré par le premier moteur à chaque instant Cmot1,v(t) et du deuxième moteur à chaque instant Cmot2,v(t) soit égale à la consigne Cap,c,v de couple délivré à l'arbre primaire lorsque les moteurs sont couplés. Puis, entre l'instant de début d'ouverture et l'instant de fin d'ouverture, on ouvre brutalement le moyen de couplage/découplage de telle sorte qu'à partir de l'instant de fin d'ouverture, correspondant à l'ouverture complète du moyen de couplage/découplage, le couple transmis à l'arbre primaire, le couple Cap, d, v visé après découplage.

Le premier moteur est par exemple un moteur électrique, le deuxième moteur est par exemple un moteur thermique, le moyen de couplage/découplage est par exemple un embrayage commandé, et le groupe motopropulseur est par exemple le groupe motopropulseur d'une automobile.

L'invention concerne également un groupe motopropulseur hybride parallèle de propulsion d'une automobile, comprenant un premier moteur, un deuxième moteur, un moyen de couplage/découplage du premier moteur et du deuxième moteur, et un moyen de pilotage, qui, pour piloter le couplage ou le découplage des deux moteurs, met en oeuvre le procédé selon l'invention.

Le moyen de pilotage comprend de préférence au moins un ordinateur et le procédé de pilotage est mis en oeuvre à l'aide d'un logiciel adapté.

L'invention va maintenant être décrite de façon plus précise mais non limitative en regard des figures annexées dans lesquelles :

- la figure 1 représente de façon schématique une chaîne de traction hybride simple en mode parallèle de la roue d'un véhicule automobile.
- la figure 2 représente de façon schématique les lois de commande utilisée pour l'accouplement du moteur thermique au moteur électrique dans un groupe motopropulseur hybride parallèle.
- la figure 3 représente de façon schématique la loi de commande utilisée pour le désacouplage du moteur thermique et du moteur électrique d'un groupe motopropulseur hybride parallèle.

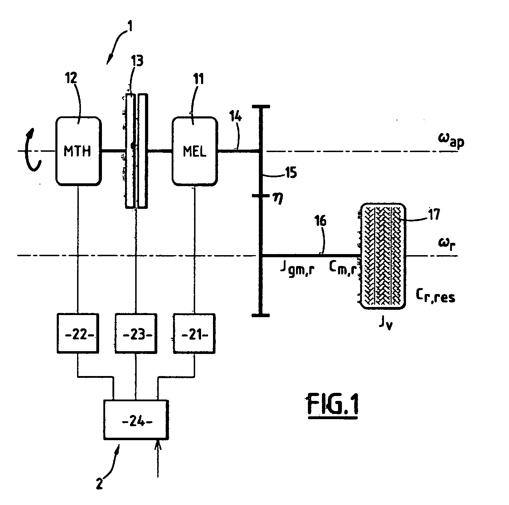

On considère la chaîne de traction hybride représentée à la figure 1. Cette chaîne de traction hybride comprend un groupe motopropulseur repéré généralement par 1, constitué d'un premier moteur 11 qui est un moteur électrique ou plus généralement une machine électrique pouvant fonctionner aussi bien en moteur qu'en générateur, un deuxième moteur 12 qui est un moteur thermique, les deux moteurs électrique et thermique pouvant être accouplés par l'intermédiaire d'un moyen de couplage/ découplage 13 qui est en général un embrayage commandé. Ce groupe motopropulseur est piloté par un moyen de pilotage repéré généralement par 2 constitué d'un ordinateur de proximité 21 destiné à piloter le premier moteur 11, d'un deuxième ordinateur de proximité 22 destiné à piloter le deuxième moteur 12, d'un troisième ordinateur de proximité 23 destiné à piloter le moyen d'accouplement/ désaccouplement 13, et d'un ordinateur de supervision 24 chargé de donner des instructions aux ordinateurs de proximité 21, 22 et 23.

L'ordinateur 24 reçoit des informations et des instructions depuis différents capteurs situés sur le véhicule, de façon connue en elle-même de l'homme du métier.

Le groupe motopropulseur 1 entraîne un arbre primaire 14 qui est l'arbre d'entrée d'une boîte de vitesse 15, laquelle entraîne un arbre de sortie 16, lequel entraîne au moins une roue 17 du véhicule.

En fonctionnement, la roue 17 est soumise d'une part à un couple résistant et d'autre part à un couple moteur qui est le couple d'entraînement de l'arbre de sortie 16 et l'accélération de l'ensemble mécanique est égal au rapport de la différence entre le couple moteur et le couple résistant divisé par le moment d'inertie vu par le système mécanique, c'est-à-dire par la somme des moments d'inertie des masses entraînées, rapportées à l'axe 16.

Si on appelle $C_r$,res le couple résistant vu par l'arbre 16 d'entraînement de la roue, $J_v$ le module d'inertie du véhicule vu par l'arbre 16 d'entraînement de la roue, $C_m$,r le couple moteur vu de l'arbre 16 d'entraînement de la roue, $J_m$,r le module d'inertie de l'ensemble du groupe à moteur vu par l'arbre 16 d'entraînement de la roue, et enfin $\omega_r$ la vitesse angulaire de la roue, on a alors $(J_v + Jm, r) \times d\omega_r / dt = C_m,r - C_r$,res.

Cette équation fondamentale de la dynamique peut être écrite par référence à l'arbre primaire 14 d'entrée dans la boîte de vitesse. Cet arbre primaire tourne à une vitesse angulaire $\omega_{ap} = \omega_r/\eta$, $\eta$ étant le rapport de la boîte de vitesse.

L'arbre primaire voit un couple résistant Cap,res = $\eta \times$ Cr,res, et une inertie d'entraînement du véhicule, Jap, v = $\eta^2 \times$ Jv . Il voit, en outre, une inertie Jap,m correspondant au groupe moteur.

L'arbre primaire 14 est soumis à un couple d'entraînement Cap qui correspond à la somme du couple qui lui est transmis par le premier moteur et du couple qui lui est éventuellement transmis par le deuxième moteur à travers le moyen de couplage et de découplage.

Avec ces notations, on a :

$$\mathtt{(Jap,m + Jap,v) \ d\omega ap/dt = Cap,m - Cap,res.}$$

Les inventeurs ont constaté que l'inertie réellement entraînée par l'arbre primaire est variable selon que le premier moteur et le deuxième moteur sont couplés ou découplés.

Lorsque seul le premier moteur est accouplé, l'arbre primaire n'entraîne que l'inertie du premier moteur.

En revanche, lorsque les deux moteurs sont accouplés et tournent à la même vitesse, l'arbre primaire 14 entraîne des masses dont l'inertie correspond à la somme des inerties du premier moteur et du deuxième moteur.

Les inventeurs ont constaté de façon nouvelle que le choc longitudinal ressenti au moment de la fermeture ou de l'ouverture brutale du moyen de couplage/ découplage lorsque le couplage ou le découplage se fait à couple constant, résultait de la différence des inerties entraînées entre les situations où les moteurs sont couplés et découplés.

Les inventeurs ont également constaté de façon nouvelle que le choc ressenti pouvait être éliminé par une discontinuité de couple d'entraînement de l'arbre primaire au moment de la fermeture ou de l'ouverture brutale du moyen de couplage/ découplage.

En effet, et en reprenant les notations qui viennent d'être indiquées, l'accélération de l'arbre primaire 14 d$\omega$ap/dt, est égale à la différence entre le couple d'entraînement de cet arbre primaire et de couple résistant auquel il est soumis, divisée par l'inertie que doit entraîner cet arbre primaire. Pour que l'accélération de l'arbre primaire soit la même avant couplage et après couplage, il est nécessaire que :

$$(Cap,c - Cap,res) / Jap,c = (Cap,d - Cap,res) / Jap,d.$$

Comme les moments d'inertie Jap,c et Jap,d sont différents, cela conduit à introduire une discontinuité du couple d'entraînement de l'arbre primaire 14 au moment où l'on couple les deux moteurs ou au moment où on les découple.

Pour assurer cette discontinuité du couple d'entraînement de l'arbre primaire 14 au moment où l'on effectue le couplage ou le découplage des moteurs, on impose au système de pilotage 2 de mettre en oeuvre une loi de commande adaptée précisément pour engendrer une telle discontinuité au moment le plus adaptée pour éviter les discontinuités d'accélération du véhicule.

Pour cela, en fonction du couple résistant Cap,res auquel est soumis l'arbre primaire, estimé par des moyens connus en eux-mêmes et qui correspondent aux équipements de base du véhicule automobile, on définit deux consignes de couple pour l'arbre primaire visé d'une part lorsque les premier et deuxième moteurs sont couplés et d'autre part lorsque ces deux moteurs sont découplés. On appellera ces consignes respectivement $C_{ap}$,c,v et $C_{ap}$,d,v.

Il s'agit alors de faire passer le couple auquel est soumis l'arbre primaire de la valeur qu'il a avant le début du couplage ou du découplage à la valeur qui est visée après couplage ou découplage, en générant au moment opportun une discontinuité telle que :

$$\Delta C = Cap,c,v - Cap,d,v.$$

Pour faire passer le couple transmis à l'arbre primaire de la valeur qu'il a avant couplage ou découplage, à la valeur visée après couplage ou découplage, on pilote les deux moteurs et le moyen de couplage découplage en leurs faisant suivre des lois de commande qui vont maintenant être décrites en distinguant d'une part le cas du couplage des moteurs et d'autre part, le cas du découplage. En effet, les lois de commande à appliquer ne sont pas les mêmes dans les deux cas.

Dans tous les cas, le premier moteur est piloté en couple, ce qui signifie qu'à chaque instant, on définit pour l'ordinateur de proximité qui le commande, une consigne de couple à faire respecter.

Le deuxième moteur est piloté uniquement en vitesse lorsqu'il est découplé, et piloté en couple lorsqu'il est couplé.

Le moyen de couplage/ découplage est piloté en couple et passe d'un état ouvert à un état fermé. Le début de la transition entre l'état ouvert et l'état fermé est appelé accostage. Lorsque le moyen de couplage/ découplage est ouvert, le couple qu'il peut transmettre est nul. Lorsqu'il est fermé, le couple qu'il peut transmettre est maximal. Entre ces deux états, le degré de fermeture des moyens de couplage/ découplage est ajusté en fonction de la consigne de couple, pour que, à chaque instant, le couple maximal qu'il peut transmettre soit égal à la consigne de couple correspondante.

Les consignes pour les différents équipements peuvent être variables dans le temps, et par exemple suivre une rampe définie pour faire passer linéairement d'une première valeur, à un instant initial, à une deuxième valeur, à un instant final. Les consignes peuvent également être constantes pendant un intervalle de temps donné, ou subir un saut brutal de valeur à instant donné.

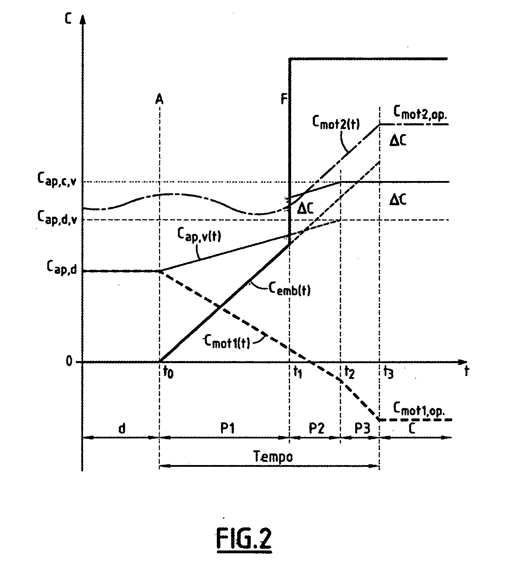

On va maintenant définir la loi de commande pour le couplage, en se référant à la figure 2.

Comme on le voit sur la figure 2, on considère une succession de périodes et d'évènements qui séparent les périodes. On a successivement :

- l'état initial, qui est la période repérée d, pendant laquelle le deuxième moteur est découplé. Pendant cette période, et à un instant non représenté sur la figure, l'ordinateur de supervision 24 du groupe moteur décide de coupler les deux moteurs et de donner à chaque moteur une consigne de couple optimal à atteindre après respectivement le couplage Cmot1,op et Cmot2,op. Pendant cette période, le moyen de couplage/ découplage est complètement ouvert et ne transmet aucun couple.
- l'instant $t_0$ auquel débute le processus de fermeture du moyen de couplage/ découplage, et qui correspond au début de la reprise de couple. A cet instant, le couple que peut transmettre le moyen de couplage/ découplage est nul.
- la période de fermeture, repérée P1, pendant laquelle, le moyen de couplage/ découplage est progressivement fermé. Pendant cette période, le moyen de couplage/ découplage est piloté en couple de façon à faire augmenter progressivement le couple maximal transmissible.
- l'instant t1 qui correspond à la fin du processus de fermeture du moyen de couplage/ découplage. A partir de cet instant t1, les deux moteurs sont synchronisés, ce qui signifie que le couple du deuxième moteur est intégralement transmis à l'arbre primaire dont le couple d'entraînement est alors égal à la somme des couples fournis par les deux moteurs.
- la période, repérée P2, pendant laquelle la consigne de couple d'entraînement de l'arbre primaire est ajustée pour atteindre la valeur visée Cap,c,v après couplage. Cette période dure jusqu'à l'instant t2 à partir duquel, la consigne de couple d'entraînement de l'arbre primaire reste constante.
- la période P3 se terminant à l'instant t3, pendant laquelle, les consignes de couple des moteurs sont ajustés pour atteindre leurs valeurs optimales à l'instant t3.
- la période, repérée C, qui correspond à l'état final dans lequel les deux moteurs sont couplés.

On va maintenant décrire le déroulement du processus de couplage.
Tout d'abord, pendant la période d, lorsque l'ordinateur de supervision 24 décide de coupler des deux moteurs, il définit :

- l'instant t3 à partir duquel les moteurs doivent être couplés avec leurs conditions de fonctionnement optimales.
- les consignes de couple optimal pour le deuxième moteur Cmot2,op, et pour le premier moteur Cmot1,op, ainsi que le couple visé pour l'arbre primaire lorsque les moteurs sont couplés Cap,c,v.
- l'instant t0 de début de fermeture du moyen de couplage/ découplage, en tenant compte d'une temporisation Tempo supérieure à la durée de fermeture du moyen de couplage/ découplage, de telle sorte que :

$$t0 = t3 - Tempo$$

- une consigne de couple qui serait visé pour l'arbre primaire si les moteurs étaient découplés Cap,d,v, qui tient compte du couple résistant Cap,res estimé auquel est soumis l'arbre primaire. Ce couple Cap, d, v est égal à la différence entre le couple visé pour l'arbre primaire lorsque les moteurs sont couplés Cap,c,v et le saut de couple $\Delta c$ nécessaire pour assurer la continuité de l'accélération au moment de la fermeture du moyen de couplage/ découplage. Soit :

$$Cap,d,v = Cap,c,v - \Delta C$$

Avec :

$$\Delta C = \frac{Jap,c - Jap,d}{Jap,c}(Cap,c,v - Cap,res)$$

Jap, c et Jap, d sont les moments d'inertie des masses entraînées par l'arbre primaire lorsque les moteurs sont couplés et découplés respectivement.
Si Jr, veh est le moment d'inertie correspondant au véhicule, rapporté à l'arbre de sortie de la boîte de vitesse, si η est le rapport de la boite de vitesse, si Jap,mot1 et Jap,mot2 sont respectivement les moments d'inertie des premier et deuxième moteurs rapportés à l'arbre primaire, on a :

$$\texttt{Jap,d = Jap,mot1 + } \eta^2 \texttt{J}_\texttt{r}\texttt{,veh}$$

et

$$\texttt{Jap,c = Jap,d + Jap,mot2.}$$

Pendant cette période de définition préalable de consignes, le deuxième moteur est piloté en régime, c'est-à-dire en vitesse de rotation, pour que, à l'instant t0, sa vitesse de rotation soit supérieure à la vitesse de rotation de l'arbre primaire.

L'ordinateur de supervision 24, donne alors pour instructions aux ordinateurs de proximité 21, 22 et 23 de démarrer le processus de couplage à partir de l'instant t0.

A partir de l'instant t0, l'ordinateur 23 de pilotage du moyen de couplage/ découplage transmet à ce moyen une consigne de couple Cemb(t) qui suit une rampe telle que, à l'instant t3, la somme de cette consigne et du saut de consigne de couple pour l'arbre primaire ΔC soit égale à la consigne de couple optimal pour le deuxième moteur, soit :

$$\texttt{Cemb(t3) + } \Delta \texttt{C = Cmot2,op}$$

Simultanément, à l'aide de l'ordinateur 21 de pilotage du premier moteur, on envoie au premier moteur une consigne de couple Cmot1(t) telle que la somme de la consigne de couple pour le premier moteur et de la consigne de couple transmis par le moyen de couplage/ découplage, soit égal à la consigne de couple visé pour l'arbre primaire Cap,v(t).

Avant l'instant t1 de fermeture du moyen de couplage/ découplage, c'est-à-dire pendant la période P, la consigne de couple transmis par le moyen de couplage/ découplage est égal à la consigne de couple pour ce moyen Cemb(t). On a alors :

$$\texttt{Cmot1(t) + Cemb(t) = Cap,v(t).}$$

Pendant cette période, le deuxième moteur est piloté en vitesse de rotation de façon à ce que sa vitesse de rotation à l'instant t1 de la fermeture du moyen de couplage/ découplage, soit égale à la vitesse de rotation de l'arbre primaire.

Après l'instant t1 de fermeture, c'est-à-dire pendant la période P2, le deuxième moteur est piloté en couple et le couple transmis par le moyen de couplage/ découplage est égal au couple fourni par le deuxième moteur. Il en résulte que la consigne de coupe pour l'arbre primaire devient égale à la somme des consignes de couple pour les deux moteurs, soit :

$$\texttt{Cap,v(t) = Cmot1(t) + Cmot2(t).}$$

La consigne de couple Cmot2(t) pour le deuxième moteur suit une rampe parallèle à la rampe de consigne de couple pour le moyen de couplage/ découplage Cemb(t), décalée par rapport à cette dernière rampe du saut de consigne de couple pour l'arbre primaire ΔC, de telle sorte qu'à l'instant t3, la consigne de couple pour le deuxième moteur est égale à la consigne de couple optimale pour la deuxième moteur.

Compte tenu de ces différentes lois de pilotage des différents composants du groupe moteur, la consigne de couple visé à chaque instant pour l'arbre primaire Cap,v(t), suit, pendant la période P1, une première rampe qui part de la valeur de couple avant couplage Cap,d, et atteint à l'instant t2, après fermeture du moyen de couplage/ découplage, la consigne visée pour l'arbre primaire découplé Cap,d,v.

A l'instant t1 de la fermeture du moyen de couplage/ découplage, la consigne de couple pour l'arbre primaire Cap,v(t) subit un saut brutal égal à ΔC. Ce saut brutal permet d'absorber le saut concommittant de moment d'inertie à entraîner.

Après cet instant t1, et pendant toute la période de P2, la consigne de couple pour l'arbre primaire Cap,v(t)suit une loi qui l'amène par une rampe régulière, à l'instant t2, à la valeur visée après couplage Cap,c,v,.

La consigne de couple pour l'arbre primaire ayant atteint à l'instant t2 la valeur visée, elle n'évolue plus après. Cependant, et si les consignes de couple pour les moteurs n'ont pas atteint leurs valeurs optimales, l'instant t2 est suivi par une période P3 qui se termine à l'instant t3 pendant laquelle les consignes de couple pour les moteurs sont amenés à leurs valeurs optimales.

Ces lois de commande mises en oeuvre par les ordinateurs de proximité 21, 22 et 23, sous la supervision de l'ordinateur 24, permettent de réaliser un couplage rapide des deux moteurs, sans que cela engendre de discontinuité dans l'accélération du véhicule, donc, sans engendrer de choc longitudinal désagréable pour les passagers.

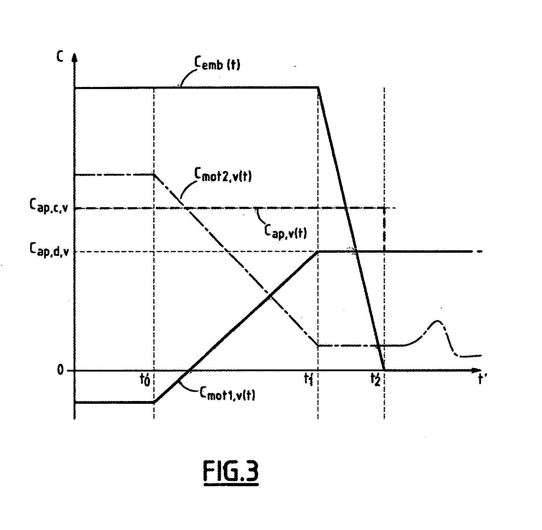

On va maintenant expliquer le procédé de pilotage du découplage du premier moteur et du deuxième moteur en regard de la figure 3.

Sur la figure 3, on considère l'instant t'0 auquel on décide de commencer à découpler le premier moteur et le deuxième moteur, c'est à dire l'instant où l'on commence à faire varier les consignes de couple des deux moteurs, l'instant t'1 auquel on déclenche l'ouverture du moyen de couplage/ découplage et l'instant t'2 auquel l'ouverture du moyen de couplage/découplage est terminée.

Avant l'instant t'0 les deux moteurs sont couplés, et entraînent l'arbre primaire ; le moyen de couplage/ découplage transmet à l'arbre primaire un couple qui est égal au couple du deuxième moteur ; l'arbre primaire est entraîné par un couple égal à la somme des couples fournis par les deux moteurs. Après l'instant t'2, les deux moteurs sont découplés et seul le premier moteur entraîne l'arbre primaire.

Comme précédemment on définit un couple visé à l'état couplé et un couple visé à l'état découplé pour l'arbre primaire Cap,c,v et Cap,d,v respectivement, visés après découplage.

Avant couplage et pendant toute l'ouverture du dispositif de couplage/ découplage, les deux moteurs sont pilotés en couple. Avant le début du processus de découplage, c'est-à-dire avant l'instant t'0, le couple visé pour le deuxième moteur est, comme on l'a représenté sur la figure, supérieur au couple visé pour l'arbre primaire à l'état couplé, le couple du premier moteur est inférieur à zéro, ce qui signifie qu'il fonctionne en générateur, et la somme des couples visée pour le premier moteur et le deuxième moteur est égale au couple visé pour l'arbre primaire à l'état couplé.

Dans l'automatisme de pilotage du groupe motopropulseur on définit une consigne de couple pour l'arbre primaire qui reste égale au couple d'arbre primaire visé à l'état couplé jusqu'à l'instant t'2 d'ouverture du moyen de couplage/ découplage, et qui, après cet instant t'2, est égale à la valeur du couple de consigne d'arbre primaire à l'état découplé Cap,d,v.

Pendant la phase de transition, entre t'0 et t'1, on envoie au deuxième moteur une consigne de couple qui évolue de telle sorte que, à l'instant t'1, elle soit égale à l'écart entre la consigne visée pour l'arbre primaire à l'état couplé et la consigne visée pour l'arbre primaire à l'état découplé Cap,c,v - Cap,d,v.

Simultanément on envoie au premier moteur une consigne de couple telle que le couple fourni par le premier moteur à l'instant du découplage soit égal au couple visé pour l'arbre primaire au moment du découplage à l'état découplé Cap,d,v.

A l'instant t'1, on déclenche l'ouverture latérale du moyen de couplage/découplage, de telle sorte qu'il est complètement ouvert à l'instant t'2.

Après l'instant t'2, le deuxième moteur n'intervient plus dans le fonctionnement du groupe moteur et ce deuxième moteur peut alors être piloté en vitesse.

Il résulte de ces consignes d'évolution des couples des moteurs pendant la période d'ouverture du moyen de couplage/ découplage que, pendant toute la période d'ouverture, la consigne de couple transmis à l'arbre primaire est égal à la consigne -de couple visé pour l'arbre primaire à l'état couplé, et, qu'à l'instant t2 d'ouverture complète du moyen de couplage/ découplage qui correspond au découplage effectif du deuxième moteur, la consigne de couple à transmettre à l'arbre primaire subit une discontinuité égale à l'écart entre la consigne de couple visé pour l'arbre primaire à l'état découplé et la consigne de couple pour l'arbre primaire visé à l'état couplé.

Cette discontinuité dans la consigne de couple transmis à l'arbre primaire correspond à la discontinuité qui est nécessaire pour effacer les effets de la discontinuité d'inertie entraînée et par conséquent pour obtenir une continuité de l'accélération du véhicule.

## Revendications

1. Procédé pour piloter le couplage ou le découplage du premier moteur (11) et du deuxième moteur (12) d'un groupe motopropulseur (1) hybride parallèle du type comprenant un premier moteur (11) entraînant un arbre primaire (14), un deuxième moteur (12) et un moyen de couplage/découplage (13) du deuxième moteur et du premier moteur, manoeuvrable entre une position d'ouverture et une position de fermeture, selon lequel on pilote le groupe motopropulseur (1) de telle sorte que la vitesse de rotation de l'arbre primaire (14) au moment du couplage et du découplage reste inchangée, **caractérisé en ce que**, pour piloter le groupe motopropulseur (1), on utilise une loi de commande qui engendrée une discontinuité entre le couple Cap,d délivré à l'arbre primaire (14) lorsque le premier et le deuxième moteurs sont découplés, et le couple Cap,c délivré à l'arbre primaire (14) lorsque le premier et le deuxième moteurs sont couplés, choisie pour compenser l'écart entre l'inertie Jap,d entraînée par l'arbre primaire (14) lorsque le premier et le deuxième moteurs sont découplés et l'inertie Jap,c entraînée par l'arbre primaire (14) lorsque le premier et le deuxième moteurs sont couplés afin d'assurer une continuité de l'accélération de l'arbre primaire (14) entraîné par le moteur au moment du couplage ou du découplage.

**2.** Procédé selon la revendication 1, **caractérisé en ce que**, si l'arbre primaire (14) du groupe motopropulseur est soumis à un couple résistant Cap,res, la discontinuité de couple ΔC = Cap,c - Cap,d engendrée est telle que :

$$\frac{Cap,c - Cap,res}{Jap,c} = \frac{Cap,d - Cap,res}{Jap,d}$$

Soit :

$$\Delta C = \frac{Jap,c - Jap,d}{Jap,d}(Cap,d - Cap,res)$$

**3.** Procédé selon la revendication 1 ou la revendication 2, **caractérisé en ce que**, on définit une consigne Cap,c,v de couple pour l'arbre primaire (14) lorsque les moteurs (11, 12) sont couplés, visée après le couplage ou le découplage, et une consigne Cap,d,v de couple pour l'arbre primaire (14) lorsque les moteurs (11, 12) sont découplés, visée après le couplage ou le découplage, tels que :

$$\frac{Cap,c,v - Cap,res}{Jap,c} = \frac{Cap,d,v - Cap,res}{Jap,d}$$

et on pilote le groupe motopropulseur (1) de telle sorte que, après la manoeuvre du moyen de couplage/découplage (13), le couple délivré à l'arbre primaire (14) est égal à la consigne de couple visée Cap,c,v ou Cap,d,v pour l'arbre primaire (14) correspondant respectivement à l'état couplé ou découplé du dispositif de couplage/découplage (13) en fin de manoeuvre.

**4.** Procédé selon la revendication 3, **caractérisé en ce que**, lorsqu'on pilote le groupe motopropulseur (1) pour coupler le premier moteur (11) et le deuxième moteur (12), on engendre une discontinuité brutale de la consigne Cap,v(t) de couple pour l'arbre primaire, visée à chaque instant, égale à l'écart entre la consigne Cap, d, v de couple de l'arbre primaire (14) lorsque les moteurs (11, 12) sont découplés et la consigne Cap,c,v de couple de l'arbre primaire (14) lorsque les moteurs (11, 12) sont couplés.

**5.** Procédé selon la revendication 4, **caractérisé en ce que** la discontinuité brutale de la consigne Cap,v(t) de couple pour l'arbre primaire (14), visée à chaque instant, est engendrée à l'instant où le dispositif de couplage/découplage (13) arrive en position de fermeture.

**6.** Procédé selon la revendication 5, **caractérisé en ce que** on commande le dispositif de couplage/découplage (13) de façon à le faire passer de la position d'ouverture à la position de fermeture, **en ce que**, à partir du début (t0) de la période de fermeture (P1) du dispositif de couplage/découplage (13), on pilote en couple le premier moteur (11) de telle sorte que, à chaque instant, la somme de la consigne de couple Cmot1(t) fourni par le premier moteur (11) et de la consigne de couple Cemb(t) délivré par le dispositif de couplage/découplage (13) soit égale à la consigne Cap,v(t), visée à chaque instant pour le couple délivré par l'arbre primaire (14), soit : Cap,v(t)=Cmot1(t) + Cemb(t), pendant la période (P1) de fermeture du dispositif de couplage/découplage, **en ce que** on pilote le deuxième moteur (12) en régime pour qu'au moment de la fermeture (t1) son régime soit sensiblement égal à la vitesse de rotation de l'arbre primaire (14), et à partir de l'instant (t1) de fermeture du dispositif de couplage/découplage (13) on pilote le deuxième moteur (12) en couple avec une consigne Cmot2,v(t) égale à la somme de la consigne de couple Cemb(t) délivré par le moyen de couplage/ découplage (13) et de l'écart entre les consignes de couple pour l'arbre primaire (14) visées après et avant couplage, soit :

$$\texttt{Cmot2,v(t) = Cemb(t) + Cap,c,v - Cap,d,v.}$$

**7.** Procédé selon la revendication 6, **caractérisé en ce que**, on définit un temps Tempo de couplage et une consigne de couple optimal pour le deuxième moteur (12) Cmot2,op, et **en ce qu'**on pilote la fermeture du dispositif de couplage/découplage (13) de telle sorte que la consigne de couple Cemb(t) délivré par le dispositif de couplage/découplage varie linéairement avec le temps pour qu'au bout d'un temps égal à Tempo après le début (t0) de l'actionnement du moyen de couplage/découplage (13), la consigne de couple délivré par le deuxième moteur (12) soit égale à la consigne Cmot2,op de couple optimal pour le deuxième moteur.

**8.** Procédé selon la revendication 3, **caractérisé en ce que**, lorsqu'on pilote le découplage du deuxième moteur (12), avant de déclencher l'ouverture du moyen de couplage/ découplage (13), on pilote le deuxième moteur (12) pour que la consigne de couple Cmot2,d délivré par le deuxième moteur juste avant l'ouverture soit égale à l'écart entre la consigne Cap,c,v de couple visée pour l'arbre primaire (14) si il n'était pas découplé et la consigne Cap, d, v de couple délivré par l'arbre primaire (14) après découplage, et on pilote le premier moteur (11) en couple de telle sorte que la consigne de couple Cmot1,v(t1) délivré par le premier moteur (11) au moment du début de l'ouverture du moyen de couplage/découplage (13) soit égale à la consigne Cap,d,v de couple de l'arbre primaire visé après découplage, et que pendant tout le découplage la somme des consignes de couple délivré par le premier moteur (11) à chaque instant Cmot1,v(t) et du deuxième moteur (12) à chaque instant Cmot2,v(t) soit égale à la consigne Cap,c,v de couple délivré à l'arbre primaire (14) lorsque les moteurs (11, 12) sont couplés, puis on ouvre le moyen de couplage/découplage de telle sorte que, après ouverture complète du moyen de couplage/découplage, le couple transmis à l'arbre primaire est égal au couple Cap,d,v visé après découplage.

**9.** Procédé selon l'une quelconque des revendications 1 à 8, **caractérisé en ce que** le premier moteur (11) est un moteur électrique, le deuxième moteur (12) est un moteur thermique, le moyen de couplage/découplage (13) est un embrayage commandé et **en ce que** le groupe motopropulseur (1) est le groupe motopropulseur d'une automobile.

**10.** Groupe motopropulseur (1) hybride parallèle de propulsion d'une automobile, comprenant un premier moteur (11), un deuxième moteur (12), un moyen de couplage/découplage (13) du premier moteur et du deuxième moteur, et un moyen de pilotage (2), **caractérisé en ce que**, pour piloter le couplage ou le découplage des deux moteurs (11, 12), le moyen de pilotage (2) met en ouvre le procédé selon l'une quelconque des revendications 1 à 9.

**11.** Groupe motopropulseur (1) selon la revendication 10, **caractérisé en ce que** le moyen de pilotage (2) comprend au moins un ordinateur (21, 22, 23, 24) et **en ce que** le procédé de pilotage est mis en oeuvre à l'aide d'un logiciel adapté.

**Claims**

**1.** A method for controlling the coupling or the decoupling of the first motor (11) and the second motor (12) of a parallel hybrid drive train (1) of the type comprising a first motor (11) driving a main shaft (14), a second motor (12), and a coupling/decoupling means (13) of the second motor and the first motor, manoeuvrable between an open position and a closed position, according to which the drive train (1) is controlled so that the rotation speed of the main shaft (14) remains unchanged at the moment of coupling and decoupling, **characterized in that** a control law is used to control the drive train (1) that generates a discontinuity between the torque Cap,d delivered to the main shaft (14) when the first and second motors are decoupled and the torque Cap,c delivered to the main shaft (14) when the first and second motors are coupled, which is selected so as to compensate the difference between the inertia Jap, d carried by the main shaft (14) when the first and second motors are decoupled and the inertia Jap,c carried by the main shaft (14) when the first and second motors are coupled in order to ensure a continuity in the acceleration of the main shaft (14) driven by the motor at the moment of coupling or decoupling.

**2.** The method according to Claim 1, **characterized in that** if the main shaft (14) of the drive train is subjected to a resisting torque Cap,res, the torque discontinuity $\Delta$C=Cap,c - Cap,d generated is such that:

$$\frac{Cap,c - Cap,res}{Jap,c} \cong \frac{Cap,d - Cap,res}{Jap,d}$$

Thus:

$$\Delta C \cong \frac{Jap,c - Jap,d}{Jap,d}(Cap,d - Cap,res)$$

**3.** The method according to Claim 1 or Claim 2, **characterized in that** a torque setpoint Cap,c,v is defined for the main shaft (14) when the motors (11, 12) are coupled, targeted after coupling or decoupling, and a torque setpoint Cap,c,v for the main shaft (14) when the motors (11, 12) are decoupled, targeted after coupling or decoupling, such that:

$$\frac{Cap,c,v - Cap,res}{Jap,c} \cong \frac{Cap,d,v - Cap,res}{Jap,d}$$

and the drive train (1) is controlled so that, after the coupling/decoupling means (13) manoeuvre, the torque delivered to the main shaft (14) is equal to the target torque setpoint Cap,c,v or Cap,d,v for the main shaft (14) corresponding respectively to the coupled or decoupled state of the coupling/decoupling device (13) at the end of the manoeuvre.

**4.** The method according to Claim 3, **characterized in that** when the drive train (1) is being controlled so as to couple the first motor (11) and the second motor (12), a sudden discontinuity is generated of the torque setpoint Cap,v(t) for the main shaft, which is targeted at each instant, equal to the difference between the main shaft (14) torque setpoint Cap,d,v when the motors (11, 12) are decoupled and the main shaft (14) torque setpoint Cap,c,v when the motors (11, 12) are coupled.

**5.** The method according to Claim 4, **characterized in that** the sudden discontinuity of the torque setpoint Cap, v(t) for the main shaft (14) which is targeted at each instant, is generated at the instant when the coupling/decoupling device (13) reaches the closed position.

**6.** The method according to Claim 5, **characterized in that** the coupling/decoupling device (13) is commanded to make it change from the open position to the closed position, **in that** starting from the beginning (t0) of the period (P1) in which the coupling/decoupling device (13) is closing, the first motor (11) is controlled for torque so that at each instant, the sum of the setpoint Cmot1(t) for torque provided by the first motor (11) and the setpoint Cemb(t) for torque delivered by the coupling/decoupling device (13) is equal to the setpoint Cap,v(t) targeted at each instant for the torque delivered by the main shaft (14), thus: Cap,v(t)=Cmot1(t)+Cemb(t), during the period (P1) when the coupling/decoupling device is closing, **in that** the second motor (12) for speed is controlled so that at the moment of closure (t1), its speed is substantially equal to the rotation speed of the main shaft (14), and from the instant (t1) the coupling/decoupling device (13) closes, the second motor (12) is controlled for torque with a setpoint Cmot2,v(t) equal to the sum of the setpoint Cemb(t) for torque delivered by the coupling/decoupling means (13) and the difference between the post- and pre-coupling target torque setpoints for the main shaft, thus:

```
Cmot2,v(t) = Cemb(t) + Cap,c,v - Cap,d,v
```

**7.** The method according to Claim 6, **characterized in that** a coupling time Tempo and an optimal torque setpoint for the second motor (12) Cmot2,op are defined, and **in that** the closing of the coupling/decoupling device (13) is controlled so that the torque setpoint Cemb(t) delivered by the coupling/decoupling device varies linearly over time, so that at the end of a time equal to Tempo after the start (t0) of activation of the coupling/decoupling means (13), the setpoint for torque delivered by the second motor (12) is equal to the optimal torque setpoint Cmot2,op for the second motor.

8. The method according to Claim 3, **characterized in that** when controlling the decoupling of the second motor (12), before initiating the opening of the coupling/decoupling means (13), the second motor (12) is controlled so that the setpoint Cmot2,d for torque delivered by the second motor just before opening is equal to the difference between the target torque setpoint Cap,c,v for the mnain shaft (13) if it were not decoupled and the setpoint Cap,d,v for torque delivered by the main shaft (14) after decoupling, and the first motor (11) is controlled for torque so that the setpoint Cmot1,v(t1) for torque delivered by the first motor (11) at the moment the coupling/decoupling means (13) begins to open is equal to the post-decoupling target torque setpoint Cap,d,v of the main shaft, and so that throughout decoupling, the sum of the setpoints for torque delivered by the first motor (11) at each instant Cmot1,v(t) and of the second motor (12) at each instant Cmot2,v(t) is equal to the setpoint Cap,c,v for torque delivered to the main shaft (14) when the motors (11, 12) are coupled, then the coupling/decoupling means is opened in such a way that after the coupling/decoupling means is completely open, the torque transmitted to the main shaft is equal to the post-decoupling target torque Cap,d,v.

9. The method according to any one of Claims 1 to 8, **characterized in that** the first motor (11) is an electric motor, the second motor (12) is a heat engine, the coupling/decoupling means (13) is a controlled clutch, and **in that** the drive train (1) is the drive train of an automobile.

10. A parallel hybrid drive train (1) for propelling an automobile, comprising a first motor (11), a second motor (12), a coupling/decoupling means (13) of the first motor and of the second motor, and a control means (2), **characterized in that** in order to control the coupling or the decoupling of the two motors (11, 12), the control means (2) implements the method according to any one of Claims 1 to 9.

11. A drive train (1) according to Claim 10, **characterized in that** the control means (2) comprises at least one computer (21, 22, 23, 24) and **in that** the control method is implemented with the aid of an appropriate software.

**Patentansprüche**

1. Verfahren zum Steuern des Einkuppelns oder Auskuppelns des ersten Motors (11) und des zweiten Motors (12) eines parallelen hybriden Motorantriebsaggregats (1) des Typs, das einen ersten Motor (11) aufweist, der eine Hauptwelle (14) antreibt, einen zweiten Motor (12) und ein Einkuppel-/Auskuppelmittel (13) des zweiten Motors und des ersten Motors, das zwischen einer Öffnungsposition und einer Schließposition betätigbar ist, gemäß welchem man das Motorantriebsaggregat (1) derart steuert, dass die Drehzahl der Hauptwelle (14) im Augenblick des Einkuppelns und des Auskuppelns unverändert bleibt, **dadurch gekennzeichnet, dass** man zum Steuern des Motorantriebsaggregats (1) ein Steuergesetz verwendet, das eine Diskontinuität zwischen dem Moment Cap,d, das an die Hauptwelle (14) geliefert wird, wenn der erste und der zweite Motor ausgekuppelt sind, und dem Moment Cap, c, das an die Hauptwelle (14) geliefert wird, wenn der erste und der zweite Motor eingekuppelt sind, bewirkt, die ausgewählt ist, um den Unterschied zwischen der Trägheit Jap,d, die von der Hauptwelle (14) bewirkt wird, wenn der erste und der zweite Motor ausgekuppelt werden, und der Trägheit Jap,c, die von der Hauptwelle (14) bewirkt wird, wenn der erste und der zweite Motor eingekuppelt werden, auszugleichen, um eine Kontinuität der Beschleunigung der Hauptwelle (14), die von dem Motor im Augenblick des Einkuppelns oder des Auskuppelns angetrieben wird, sicherzustellen.

2. Verfahren nach Anspruch 1, **dadurch gekennzeichnet, dass,** wenn die Hauptwelle (14) des Motorantriebsaggregats einem Widerstandsmoment Cap,res unterworfen wird, die Diskontinuität des Moments ΔC = Cap,c - Cap,d, die verursacht wird, derart ist, dass

$$\frac{Cap,c - Cap,res}{Jap,c} = \frac{Cap,d - Cap,res}{Jap,d}$$

nämlich:

$$\Delta C = \frac{Jap, c - Jap, d}{Jap, d} (Cap, d - Cap, res)$$

3. Verfahren nach Anspruch 1 oder Anspruch 2, **dadurch gekennzeichnet, dass** man einen Momentsollwert Cap,c, v für die Hauptwelle (14) definiert, wenn die Motoren (11, 12) eingekuppelt sind, der nach dem Einkuppeln oder Auskuppeln angestrebt wird, und einen Momentsollwert Cap,d,v für die Hauptwelle (14), wenn die Motoren (11, 12) ausgekuppelt sind, der nach dem Einkuppeln oder Auskuppeln angestrebt wird, so dass:

$$\frac{Cap, c, v - Cap, res}{Jap, c} = \frac{Cap, d, v - Cap, res}{Jap, d}$$

und man das Motorantriebsaggregat (1) derart steuert, dass nach dem Betätigen des Einkuppel-/Auskuppelmittels (13) das an die Hauptwelle (14) gelieferte Moment gleich dem angestrebten Momentsollwert Cap,c,v oder Cap,d, v für die Hauptwelle (14) ist, der jeweils dem eingekuppelten oder dem ausgekuppelten Zustand der Einkuppel-/Auskuppelvorrichtung (13) am Ende der Betätigung entspricht.

4. Verfahren nach Anspruch 3, **dadurch gekennzeichnet, dass** man, wenn man das Motorantriebsaggregat (1) steuert, um den ersten Motor (11) und den zweiten Motor (12) einzukuppeln, eine plötzliche Diskontinuität des Momentsollwerts Cap,v(t) für die Hauptwelle bewirkt, der in jedem Zeitpunkt angestrebt wird, gleich dem Unterschied zwischen dem Momentsollwert Cap,d,v der Hauptwelle (14), wenn die Motoren (11, 12) ausgekuppelt sind, und dem Momentsollwert Cap,c,v der Hauptwelle (14), wenn die Motoren (11, 12) eingekuppelt sind.

5. Verfahren nach Anspruch 4, **dadurch gekennzeichnet, dass** die plötzliche Diskontinuität des Momentsollwerts Cap,v(t) für die Hauptwelle (14), die jederzeit angestrebt wird, in dem Augenblick erzeugt wird, in dem die Einkuppel-/Auskuppelvorrichtung (13) in der Schließposition ankommt.

6. Verfahren nach Anspruch 5, **dadurch gekennzeichnet, dass** man die Einkuppel-/Auskuppelvorrichtung (13) derart steuert, dass sie von der Öffnungsposition auf die Schließposition übergeht, und dass man, ab dem Anfang (t0) der Schließperiode (P1) der Einkuppel-/Auskuppelvorrichtung (13) das Moment des Motors (11) derart steuert, dass die Summe des Momentsollwerts Cmot1(t), der von dem ersten Motor (11) geliefert wird, und des Momentsollwerts Cemb(t), der von der Einkuppel-/Auskuppelvorrichtung (13) geliefert wird, gleich dem in jedem Zeitpunkt für das von der Hauptwelle (14) gelieferte Moment angestrebten Sollwert Cap,v(t), nämlich: Cap,v(t)=Cmot1(t) + Cemb(t) während der Schließperiode (P1) der Einkuppel-/Auskuppelvorrichtung ist, dass man die Drehzahl des zweiten Motors (12) derart steuert, dass im Augenblick des Schließens (t1) seine Drehzahl im Wesentlichen gleich der Drehzahl der Hauptwelle (14) ist, und ab dem Augenblick (t1) des Schließens der Einkuppel-/Auskuppelvorrichtung (13) das Moment des zweiten Motors (12) mit einem Sollwert Cmot2,v(t) gleich der Summe des Momentsollwerts Cemb(t), der von dem Einkuppel-/Auskuppelvorrichtung (13) geliefert wird, und dem Unterschied zwischen den Momentsollwerten für die Hauptwelle (14), die nach und vor dem Einkuppeln angestrebt wird, steuert, nämlich:

$$Cmot2, v(t) = Cemb(t) + Cap, c, v - Cap, d, v.$$

7. Verfahren nach Anspruch 6, **dadurch gekennzeichnet, dass** man eine Einkuppelzeit Tempo und einen optimalen Momentsollwert Cmot2,op für den zweiten Motor (12) definiert, und dass man das Schließen der Einkuppel-/Auskuppelvorrichtung (13) derart steuert, dass der Momentsollwert Cemb(t), der von der Einkuppel-/Auskuppelvorrichtung geliefert wird, linear mit der Zeit variiert, so dass nach Ablaufen einer Zeit gleich Tempo nach dem Anfang (t0) des Betätigens des Einkuppel-/Auskuppelmittels (13) der von dem zweiten Motor (12) gelieferte Momentsollwert gleich dem optimalen Momentsollwert Cmot2,op für den zweiten Motor ist.

8. Verfahren nach Anspruch 3, **dadurch gekennzeichnet, dass** man, wenn man das Abkuppeln des zweiten Motors (12) steuert, vor dem Auslösen des Öffnens des Einkuppel-/Auskuppelmittels (13) den zweiten Motor (12) steuert, damit der Momentsollwert Cmot2,d, der von dem zweiten Motor gleich vor dem Öffnen geliefert wird, gleich dem Unterschied zwischen dem Momentsollwert Cap,c,v, der für die Hauptwelle (14) angestrebt wird ist, wenn sie nicht ausgekuppelt ist, und dem von der Hauptwelle (14) nach dem Auskuppeln gelieferten Momentsollwert Cap,d,v ist, und man das Moment des ersten Motors (11) derart steuert, dass der Momentsollwert Cmotl,v(t1), der von dem ersten Motor (11) im Augenblick des Anfangs des Öffnens des Einkuppel-/Auskuppelmittels (13) geliefert wird, gleich dem Momentsollwert Cap,d,v der Hauptwelle ist, der nach dem Auskuppeln angestrebt wird, und dass während des ganzen Auskuppelns die Summe der Momentsollwerte, die von dem ersten Motor (11) in jedem Augenblick Cmot1,v (t) und dem zweiten Motor (12) in jedem Augenblick Cmot2,v(t) geliefert werden, gleich dem Momentsollwert Cap, c,v ist, der an die Hauptwelle (14) geliefert wird, wenn die Motoren (11, 12) eingekuppelt sind, wonach man das Einkuppel-/Auskuppelmittel derart öffnet, dass nach dem kompletten Öffnen des Einkuppel-/Auskuppelmittels das an die Hauptwelle übertragene Moment gleich dem Moment Cap,d,v, das nach dem Auskuppeln angestrebt wird, ist.

9.  Verfahren nach einem der Ansprüche 1 bis 8, **dadurch gekennzeichnet, dass** der erste Motor (11) ein Elektromotor ist, der zweite Motor (12) ein Verbrennungsmotor ist, dass das Einkuppel-/Auskuppelmittel (13) eine gesteuerte Kupplung ist, und dass das Motorantriebsaggregat (1) das Motorantriebsaggregat eines Kraftfahrzeugs ist.

10. Paralleles hybrides Motorantriebsaggregat (1) zum Antreiben eines Kraftfahrzeugs, das einen ersten Motor (11), einen zweiten Motor (12), ein Einkuppel-/Auskuppelmittel (13) des ersten Motors und des zweiten Motors und ein Steuermittel (2) aufweist, **dadurch gekennzeichnet, dass** das Steuermittel (2) zum Steuern des Einkuppelns oder Auskuppelns der zwei Motoren (11, 12) das Verfahren nach einem der Ansprüche 1 bis 9 anwendet.

11. Motorantriebsaggregat (1) nach Anspruch 10, **dadurch gekennzeichnet, dass** das Steuermittel (2) mindestens einen Computer (21, 22, 23, 24) aufweist, und dass das Steuerverfahren mit Hilfe einer entsprechenden Software umgesetzt wird.

FIG.1

**FIG.2**

**FIG.3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030004031 A